# EUROPÄISCHE PATENTSCHRIFT

(11) **EP 0 792 299 B1**
(45) Veröffentlichungstag und Bekanntmachung des Hinweises auf die Patenterteilung: **09.09.1998**
(21) Anmeldenummer: 95937073.5
(22) Anmeldetag: 14.11.1995
(51) Int. Cl.: C08F 265/04

(54) **VERFAHREN ZUR HERSTELLUNG VON KAUTSCHUKFORMMASSEN**
RUBBER MOULDING MATERIAL PRODUCTION PROCESS
PROCEDE DE PRODUCTION DE MATIERES MOULABLES EN CAOUTCHOUC

(30) Priorität: 14.11.1994 DE 4440676
(43) Veröffentlichungstag der Anmeldung: 03.09.1997
(73) Patentinhaber: BASF AKTIENGESELLSCHAFT, 67056 Ludwigshafen (DE)
(72) Erfinder: MC KEE, Graham, Edmund, D-67433 Neustadt (DE); GAUSEPOHL, Hermann, D-67112 Mutterstadt (DE); MOORS, Rainer, D-76726 Germersheim (DE); ROSENAU, Bernhard, D-67434 Neustadt (DE); HECKMANN, Walter, D-69469 Weinheim (DE)
(74) Vertreter: Isenbruck, Günter, Dr.
(86) Internationale Anmeldenummer: EP9504475
(87) Internationale Veröffentlichungsnummer: WO9615167

(56) Entgegenhaltungen:
- EP-A- 0 057 845
- EP-A- 0 306 806
- DE-A- 2 021 898
- FR-A- 2 328 004

## Beschreibung

Die Erfindung betrifft ein Verfahren zur Herstellung von kautschukmodifizierten Formmassen, insbesondere Acrylnitril-Styrol-Acrylat-Formmassen, in gelöstem oder gequollenem Zustand und nach dem Verfahren hergestellte kautschukmodifizierte Formmassen.

Kautschukmodifizierte Formmassen sind Massen, bei denen Domänen von Elastomeren, z.B. Kautschuken, in eine Matrix aus einem Thermoplasten eingebettet sind. Es besteht ein großer Bedarf an kautschukmodifizierten Formmassen, die Oberflächenglanz, Schlagzähigkeit und Reißfestigkeit aufweisen. Dabei ist die charakteristische Domänenstruktur für die erwünschten mechanischen Eigenschaften verantwortlich.

Die Mehrphasigkeit und damit auch die Domänenstruktur von kautschukmodifizierten Formmassen beruht darauf, daß diese aus verschiedenen Polymerkomponenten aufgebaut sind, die nicht oder nur teilweise miteinander mischbar sind. Die Schlagzähigkeit derselben resultiert aus einer erhöhten Energieaufnahme bei der Deformation bis zum Bruch. Die Energie wird dabei zur Bildung von Mikrohohlräumen oder zur Einleitung von Abgleitvorgängen der Matrixpolymerketten verbraucht. Die Mehrphasigkeit ist deshalb eine notwendige Voraussetzung für das Erreichen hoher Schlagzähigkeiten.

Im übrigen gilt folgendes:
1. Die zwei chemisch verschiedenen Polymerkomponenten bilden eine stabile Dispersion mit definierter Teilchengröße, die im Bereich der thermoplastischen Schmelze (Verarbeitung) weder Phasenseparation zeigt, noch bei intensiverer Temperatureinwirkung zur Homogenisierung unter Bildung einer makromolekularen Lösung neigt.
2. Zwischen den Elastomerpartikeln und der Matrix muß eine Kopplung bestehen, d. h. an den Phasengrenzflächen müssen Kräfte übertragen werden können.

Die wirkungsvollste Phasenkopplung an den Grenzflächen der Elastomerteilchen wird durch Pfropfcopolymerisation erreicht. Z.B. wird bei der Herstellung von Acrylnitril-Styrol-Acrylat-(ASA)-Formmassen in der Regel so verfahren, daß ein Acrylat-Kautschuk vorgelegt wird, auf den anschließend durch Polymerisation mit einem Monomerengemisch aus Styrol und Acrylnitril Copolymerer auf der Basis der beiden letzteren Monomeren aufgepfropft werden.

Die Herstellung von ASA-Formmassen in Emulsion ist zum Beispiel beschrieben in DE 32 06 136, 31 49 046, 31 49 358, 32 27 555, 31 29 378, 31 29 472, 29 40 804, 28 26 925 und 19 11 882. Dabei wird der Kautschuk aus n-Butylacrylat und geringen Mengen an zwei Doppelbindungen enthaltenden Monomeren in Emulsion hergestellt. Nachteile dieses Verfahrens sind, daß größere Mengen Wasser durch die Emulsionspolymerisation sowie durch die Fällung der Polymerdispersion anfallen, die gereinigt werden müssen. Weiterhin weisen die nach dem Verfahren hergestellten Formmassen eine nicht für alle Anwendungen ausreichende Schlagzähigkeit und Reißfestigkeit auf, und der Glanz der daraus hergestellten Formkörper ist nicht über eine breite Skala variierbar.

Aus diesen Gründen werden die Formmassen am vorteilhaftesten in Lösung hergestellt. Solche Verfahren sind in EP 0 095 919 und DE 11 82 811 beschrieben.

Nach EP 0 095 919 findet keine Pfropfung der Comonomeren auf den Kautschuk, d.h. keine wirksame Kopplung an der Grenzfläche, statt. Gemäß DE 11 82 811 wird der Kautschuk aus n-Butylacrylat mit 0,5 bis 10 Gew.-% eines Comonomeren mit zwei radikalisch polymerisierbaren Doppelbindungen hergestellt. Die Polymerisation des Styrol-Acrylnitril (SAN)-Monomerengemisches wird bei einem Kautschukumsatz von 10 bis 80 % gestartet. Dies hat zur Folge, daß der gepfropfte Anteil des Kautschuks nicht die gleiche Zusammensetzung wie die Polymermatrix besitzt, was zu schlechteren mechanischen Eigenschaften der Formmassen führt. Weiterhin führt die Einpolymerisation von Kautschukeinheiten in die Pfropfhülle, d. h. die Pfropfäste, zu einer Herabsetzung der Vicaterweichungstemperatur der Produkte.

Der Erfindung liegt demnach die Aufgabe zugrunde, ein Verfahren zur Herstellung von kautschukmodifizierten Formmassen mit verbesserter Schlagzähigkeit, Reißfestigkeit und Reißdehnung zu schaffen.

Diese Aufgabe wird durch das erfindungsgemäße Verfahren gelöst, bei dem in einer ersten Stufe ein erstes Gemisch (A), das zumindest ein Alkylacrylat oder -methacrylat (a) der allgemeinen Formel (I) 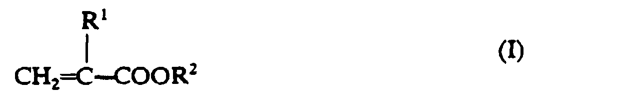
in der R¹ ein Wasserstoffatom oder eine Methylgruppe und R² eine Alkylgruppe mit 1 bis 32 Kohlenstoff-Atomen bedeutet, ein erstes, zwei oder mehr Doppelbindungen aufweisendes Monomeres (b) und gegebenenfalls ein zweites Monomeres (c) oder mehrere enthält, mit freien Radikalen zu einem Kautschuk (B), vorzugsweise in Lösung, polymerisiert wird,
in einer zweiten Stufe der entstandene Kautschuk (B) zur Bildung eines zweiten Gemisches (C) in einem dritten Monomeren (d) oder mehreren, gegebenenfalls unter Zugabe eines Lösungsmittels, gelöst oder gequollen wird und
in einer dritten Stufe das nach dem Lösen oder Quellen gebildete zweite Gemisch (C) zu der kautschukmodifizierten Formmasse (D) polymerisiert wird, vorzugsweise mit freien Radikalen.

In der dritten Stufe findet dabei eine Pfropfcopolymerisation statt, wobei das Rückgrat des entstehenden Pfropfcopolymeren von dem Kautschuk (B) gebildet wird und die Pfropfäste aus dem dritten Monomeren (d) aufgebaut sind. Weil keine 100%-ige Pfropfung stattfindet, bleibt ein Teil des Kautschuks ungepfropft und es wird gleichzeitig ein Kettenpolymeres aus dem dritten Monomeren (d) gebildet, so daß in der Formmasse drei Arten von Molekülen vorliegen.

Die Herstellung einer verbesserten kautschukmodifizierten Formmasse durch das erfindungsgemäße Verfahren erfolgt indem in der ersten Stufe das Acrylat oder -Methacrylat mit einem zwei oder mehr Doppelbindungen aufweisenden Monomeren copolymerisiert wird. Es wird derzeit angenommen, daß die Verbesserung der Eigenschaften der Formmasse u.a. darauf beruht, daß
1. die nach der Copolymerisation in Stufe 1 verbliebenen Doppelbindungen des ersten Monomeren (b) als Pfropfstellen für die wachsenden Ketten des dritten Monomeren (d) wirken,
2. das Molekulargewicht des Polyalkylacrylats oder -methacrylats, das das eingebaute erste Monomere (b) enthält, im Vergleich zu solchen ohne eingebaute erste Monomere (b) erhöht ist,
3. durch Verwendung des ersten Monomeren (b) mit zwei oder mehr Doppelbindungen die niedermolekularen Anteile des Kautschuks reduziert werden. Letzteres führt zu einer Verbesserung der mechanischen Eigenschaften.

Beispiele für Alkylgruppen R² mit 1 bis 32 Kohlenstoffatomen sind die Methyl-, Ethyl-, n-Propyl-, iso-Propyl-, n-Butyl-, iso-Butyl-, tert.-Butyl-, n-Pentyl-, iso-Pentyl-, n-Hexyl-, n-Heptyl-, n-Octyl-, Ethylhexyl-, n-Nonyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Hentriacontyl- und Dotriacontyl-Gruppe.

Gemäß einer bevorzugten Ausführungsform der Erfindung ist R² eine Alkylgruppe mit 1 bis 18 Kohlenstoffatomen.

Gemäß einer weiteren bevorzugten Ausführungsform der Erfindung weist das Gemisch (A) die folgende Zusammensetzung auf:
30 bis 99,9 Gew.-% des Alkylacrylats oder -methacrylats (a),
0,11 bis 10 Gew.-% des ersten Monomeren (b) und,
0 bis 60 Gew.-% des zweiten Monomeren (c).

Die bevorzugten Bereiche sind:
36 bis 99,9 Gew.-% (a),
0,1 bis 4 Gew.-% (b),
0 bis 60 Gew.-% (c),
wobei alle Angaben in Gew.-% auf die Gesamtmenge des Gemischs (A) bezogen sind.

Der Kautschuk (B) hat vorzugsweise eine Glastemperatur von weniger als 0 °C, bevorzugt weniger als -10 °C, aufweisen, wobei die Bestimmung der Glastemperatur mittels DSC nach ASTM 3418 erfolgt. Der Kautschuk weist damit die erforderliche Weichheit auf. Die Glastemperatur kann dabei entweder durch Verwendung eines Acrylats oder Methacrylats, dessen Polymeres die erwünschte Glastemperatur aufweist, oder durch Verwendung eines Gemisches von Acrylaten oder Methacrylaten die verschiedene Längen der Seitenketten (R², in Formel I) aufweisen, eingestellt werden. Diese Einstellung der Glastemperatur beruht darauf, daß die Glastemperatur von Acrylat- und Methacrylatpolymeren mit zunehmender Länge der Seitenkette zunächst abnimmt, dann ein Minimum durchläuft und schließlich wieder zunimmt. Das Minimum liegt bei einer Seitenkette von etwa 7 Kohlenstoffatomen für Polyacrylate und von 10 für Polymethacrylate. Dieser allgemeine Bereich für die Länge der Seitenketten R² ist daher bevorzugt.

Die hergestellte kautschukmodifizierte Formmasse (D) enthält 1 bis 60 Gew.-%, vorzugsweise 5 bis 40 Gew.-%, des Kautschuks (B). Die Obergrenze ergibt sich daraus, daß die Formmasse trotz der eingebetteten Domänen des Kautschuks eine ausreichende Festigkeit aufweisen muß.

Die Untergrenze wird im wesentlichen dadurch bestimmt, daß bei der Deformation ausreichend Energie aufgenommen werden muß.

Gemäß einer weiteren bevorzugten Ausführungsform der Erfindung wird als Alkylacrylat oder -methacrylat n-Butylacrylat oder Ethylhexylacrylat oder Mischungen davon verwendet.

Beispiele für erste Monomere (b) sind Allylmethacrylat, Butandioldiacrylat, Divinylbenzol, Triallylcyanurat und Dihydrodicyclopentadienylacrylat, wobei letzteres bevorzugt ist.

Beispiele für zweite Monomere (c) sind Styrol, Acrylnitril, Acrylsäure, Methacrylsäure, Derivate der beiden letzteren wie Acrylamid, Methacrylamid, Glycidylacrylat und Glycidylmethacrylat, Maleinsäureanhydrid, Maleinimid und Ethylen. Weitere Beispiele sind Monomere, die bei thermischer Zersetzung Radikale bildenden Gruppen, wie Peroxigruppen, Diazogruppen und labile C-C-Bindungen, enthalten, z. B. tert.-Butyl-3-Isopropenylcumyl-Peroxid oder tert.-Butylperoxycrotinat. Das Gemisch (A) enthält bis zu 60 Gew.-%, vorzugsweise bis zu 40 Gew.-%, dieser Monomeren.

Beispiele für die Monomeren (d) sind die bereits für (c) genannten, die keine radikalliefernden Gruppen aufweisen, vorzugsweise Styrol der Formel 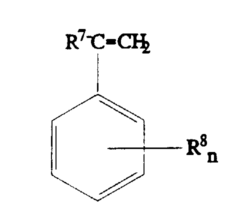 in der R⁷ und R⁸, die gleich und verschieden sein können, Wasserstoff und Alkyl mit 1-8 C-Atomen und n Werte von 0 bis 4 bedeuten, und/oder und Acrylnitril. Nach dem erfindungsgemäßen Verfahren werden demnach insbesondere ASA-Formmassen hergestellt.

In der dritten Stufe des erfindungsgemäßen Verfahrens kann die Polymerisation entweder durchgehend in Lösung oder in Masse durchgeführt werden oder nach einem Umsatz von mindestens 15% als Suspensionspolymerisation weitergeführt werden.

Der Gehalt an Acrylat-Monomereinheiten in dem Kautschuk liegt bei mindestens 30 Gew.-%, bevorzugt mindestens 60 Gew.-%, besonders bevorzugt mindestens 90 Gew.-%.

Die Polymerisation wird bei einer Temperatur von 0°C bis 200°C, bevorzugt 50°C bis 160°C durchgeführt. Alle gängigen Polymerisationsverfahren können verwendet werden, jedoch ist die Polymerisation mit freien Radikalen bevorzugt.

Die Abmischungen können Additive wie Schmiermittel, Antioxidanzien, Farbstoffe, Glasfasern und/oder Füllstoffe enthalten.

Die Erfindung wird im folgenden anhand besonders bevorzugter Ausführungsbeispiele näher beschrieben.

Die Kautschuke in gepfropfter Form kommen in der Formmasse als Teilchen mit einem Durchmesser zwischen 0,1 und 20 µm, bevorzugt zwischen 0,1 und 10 µm, in der Polymermatrix vor. Bevorzugt werden bi- oder trimodale Verteilungen. Die Kautschukteilchen liegen im Form von Kapseln, Stäbchen, Tropfen, Labyrinthen, Zellen, Knäueln, Schalen, Stäbchenclustern oder Tropfenclustern vor. Jedoch werden auch Teilchen, die aus mehreren kugelförmigen Teilchen bestehen, beobachtet. Bevorzugt werden Zellen oder der letztgenannte Typ. Die genannten Teilchenformen sind in A. Echte, Advances in Chemical Serials, 222, S. 29, 1989, beschrieben.

### Beispiele

In den Beispielen werden die folgenden Verbindungen verwendet:

Cyclohexan, Butylacrylat, Dihydrodicyclopentadienylacrylat, Acrylnitril und Styrol sind Produkte der BASF und werden ohne weitere Reinigung verwendet.

Luviskol® K 90 stellt ebenfalls ein Produkt der BASF dar und ist ein Polyvinylpyrrolidon mit einem K-Wert von 90, gemessen 1%-ig in Wasser bei 25 °C. Die Messung des K-Werts wird in Cellulose Chemie, 13, 1932, S. 358 bis 364, beschrieben.

Tetra-Natrium-di-phosphat wurde von der Firma Merck, Azobisisobutyronitril von der Firma Akzo Chemicals bezogen.

Als Stabilisator wurde 3-(3,5-Di-tert.-butyl-4-hydroxy-phenyl)-propionsäureoctadecylester verwendet, ein phenolisches Antioxidans, das unter der Bezeichnung Irganox® 1076 von der Firma Ciba Geigy vertrieben wird.

Ertivinol® ist ein Polyvinylalkohol der Firma Ercros.

Rongalit® C ist das Natriumsalz der Hydroxymethansulfonsäure.

### Versuch 1 (Vergleich)

### a. Kautschukherstellung

In einen Kolben wurden 750 g Cyclohexan eingefüllt, unter Stickstoff und Rühren auf 75 °C erhitzt und anschließend 125 g n-Butylacrylat und 545 mg Azobisisobutyronitril zugegeben. Über die nächsten 4 Stunden wurden 375 g n-Butylacrylat kontinuierlich zudosiert und danach für weitere 3,5 Stunden reagieren lassen. Der Umsatz betrug 94 Gew.-%. Anschließend wurde mit 1 g Irganox 1076 stabilisiert.

### b. Herstellung des Endproduktes

In einem Rotationsverdampfer wurde unter Vakuum das Cyclohexan entfernt und gegen Styrol ausgetauscht und dann mit Acrylnitril aufgestockt, um eine Mischung aus 69,2 Gew.-% Styrol, 23 Gew.-% Acrylnitril und 7,8 Gew.-% Kautschuk zu ergeben. 1923 g dieser Lösung wurden zusammen mit 2,31 g Irganox 1076 und 1,35 g t-Dodecylmercaptan in einen 5l-Stahlkessel eingefüllt und unter Stickstoff und Rühren auf 130 °C erhitzt. Bei einem Umsatz von 39 Gew.-% erfolgte eine Zugabe von 1,9 g Dicumylperoxid, 1900 g Wasser, 20 g Luviskol K 90, 1,0 g Tetra-Natrium-di-Phosphat und 59,8 g einer 10%igen Ertivinollösung in Wasser. Der Ansatz wurde wie folgt auspolymerisiert:
110 °C für 3 h
130 °C für 3 h
140 °C für 6 h.

Danach wurde gekühlt, das Polymer abfiltriert und getrocknet.

### Versuch 2 (erfindungsgemäß)

Versuch 1 wurde wiederholt, aber 4,0 Gew.-% des n-Butylacrylats wurden gegen Dihydrodicyclopentadienylacrylat ausgetauscht. Der Umsatz bei der Kautschukherstellung betrug 98 Gew.-%

### Versuch 3 (Vergleich)

Die folgende Vorlage wurde in einen Glaskolben unter Stickstoff und Rühren eingeführt. Bei 30 °C wurden die folgenden Zuläufe 1 und 2 über 3 Stunden zudosiert und der Ansatz 2 Stunden weiterpolymerisiert. Der Umsatz der Polymerisationsreaktion betrug 98 Gew.-%.

### Vorlage

525,6 g Wasser
4,8 g einer 40%igen Lösung in Wasser einer C₁₂₋₁₈-Paraffinsulfonsäure
1,36 g t-Butylhydroperoxid
0,088 g Eisen(II)Sulfat

### Zulauf 1

450 g n-Butylacrylat

### Zulauf 2

188,0 g Wasser
14,4 g einer 40%igen Lösung eines Kaliumsalzes einer C₁₂₋₁₈-Paraffinsulfonsäure
0,58 g Rongalit C

Die Dispersion wurde mit Magnesiumsulfatlösung ausgefällt und getrocknet. Der Kautschuk wurde dann in einem Styrol-Acrylnitril-Monomerengemisch gelöst und die Monomere wurden wie folgt polymerisiert:
a. In einem Stahlkessel wurde unter Rühren und in einer Stickstoffatmosphäre folgende Lösung hergestellt:
   69,2 Gew.-Teile Styrol
   23,0 Gew.-Teile Acrylnitril
   7,8 Gew.-Teile des in Emulsion hergestellten Kautschuks
   0,1 Gew.-Teile Irganox® 1076
   0,2 Gew.-Teile t-Dodecylmercaptan

   Die Lösung wurde auf 80 °C erhitzt und 0,04 Gew.-Teile t-Butylperpivalat zugegeben.
b. Bei 28 Gew.-% Umsatz erfolgte die Zugabe von
   0,1 Gew.-Teilen Dicumylperoxid
   100 Gew.-Teilen Wasser
   1 Gew.-Teil Luviskol® K 90
   0,1 Gew.-Teilen Tetra-Natrium-di-phosphat
   3,0 Gew.-Teilen einer 10%-igen Ertivinollösung in Wasser.

Der Ansatz wurde wie folgt auspolymerisiert:
110 °C für 3 h
130 °C für 3 h
140 °C für 6 h.

Danach wurde gekühlt, das Polymer abfiltriert und getrocknet.

### Versuch 4 (erfindungsgemäß)

Versuch 3 wurde wiederholt, aber 4 Gew.-% des n-Butylacrylats wurden durch Dihydrodicyclopentadienylacrylat ersetzt.

### Ergebnisse

| | Schlagzähigkeit kJ/m² | Reißfestigkeit N/mm² | Reißdehnung % |
|---|---|---|---|
| | <------------bei 23 °C----------------> | | |
| 1. (Vergleich) | 11 | 59 | 2,3 |
| 2. (Erfindungsgemäß) | 26 | 73 | 4,4 |
| 3. (Vergleich) | 17 | n. g. | n. g. |
| 4. (Erfindungsgemäß) n. g.: nicht gemessen | 41 | n. g. | n. g. |

Man erkennt, daß durch die erfindungsgemäße Verwendung von Comonomeren (b) in dem Kautschuk die mechanischen Eigenschaften wesentlich verbessert werden im Vergleich zu Kautschukformmassen, die keine dieser Monomeren (b) enthalten.

## Patentansprüche

1. Verfahren zur Herstellung von kautschukmodifizierten Formmassen (D), **dadurch gekennzeichnet**, daß
in einer ersten Stufe ein erstes Gemisch (A), das zumindest ein Alkylacrylat oder -methacrylat (a) der allgemeinen Formel (I) 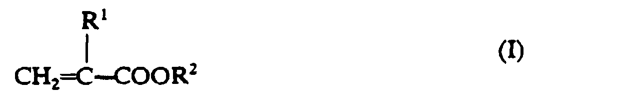
in der R¹ ein Wasserstoffatom oder eine Methylgruppe und R² eine Alkylgruppe mit 1 bis 32 Kohlenstoff-Atomen bedeutet, ein erstes zwei oder mehr Doppelbindungen aufweisendes Monomeres (b) und gegebenenfalls ein zweites oder mehrere Monomere (c) enthält, in einem Anteil von bis zu 60 %, vorzugsweise mit freien Radikalen, zu einem Kautschuk (B) mit einem Gehalt von Acrylat-Monomereinheiten von mindestens 30 Gew.-% polymerisiert wird,
in einer zweiten Stufe der entstandene Kautschuk (B) zur Bildung eines zweiten Gemisches (C) in einem dritten Monomeren (d) oder mehreren gelöst, gegebenenfalls unter Zugabe eines Lösungsmittels, oder gequollen wird, und
in einer dritten Stufe das nach dem Lösen oder Quellen gebildete zweite Gemisch (C) zu der kautschukmodifizierten Formmasse (D) bei einer Temperatur von 0°C bis 200°C polymerisiert wird,
wobei die kautschukmodifizierte Formmasse (D) 1 bis 60 Gew.-% des Kautschuks (B) enthält, und die Kautschuke (B) in gepfropfter Form in der Formmasse (D) als Teilchen mit einem Durchmesser zwischen 0,1 und 20 µm in der Polymermatrix vorkommen.

2. Verfahren nach Anspruch 1, **dadurch gekennzeichnet**, daß R² eine Alkylgruppe mit 1 bis 18 Kohlenstoffatomen bedeutet.

3. Verfahren nach Anspruch 1 oder 2, **dadurch gekennzeichnet,** daß das Gemisch (A) die folgende Zusammensetzung aufweist:
30 bis 99,9 Gew.-% des Alkylacrylats oder -methacrylats (a)
0,1 bis 10 Gew.-% des ersten Monomeren (b) und
0 bis 60 Gew.-% des zweiten Monomeren (c),
wobei alle Angaben in Gew.-% auf die Gesamtmenge des Gemischs (A) bezogen sind.

4. Verfahren nach einem der Ansprüche 1 bis 3, **dadurch gekennzeichnet,** daß kautschukmodifizierte Formmassen (D) hergestellt werden, die 5 bis 40 Gew.-%, bezogen auf die Gesamtmenge der kautschukmodifzierten Formmasse (D), des Kautschuks (B) enthalten.

5. Verfahren nach einem der Ansprüche 1 bis 4, **dadurch gekennzeichnet,** daß n-Butylacrylat oder Ethylhexylacrylat als Alkylacrylat oder -methacrylat (a) verwendet wird.

6. Verfahren nach einem der Ansprüche 1 bis 5, **dadurch gekennzeichnet,** daß Dihydrodicyclopentadienylacrylat als erstes Monomeres (b) verwendet wird.

7. Verfahren nach einem der Ansprüche 1 bis 6, **dadurch gekennzeichnet,** daß Styrol und Acrylnitril als drittes Monomeres (d) verwendet werden.

8. Verfahren nach einem der Ansprüche 1 bis 7, **dadurch gekennzeichnet,** daß das zweite Monomere (c) bei thermischer Zersetzung Radikale bildende Gruppen enthält.

9. Verfahren nach einem der Ansprüche 1 bis 8, **dadurch gekennzeichnet,** daß in der dritten Stufe die Polymerisation nach einem Umsatz von mindestens 15% als Suspensionspolymerisation weitergeführt wird.

10. Kautschukformmasse, hergestellt nach einem der vorhergehenden Verfahrensansprüche.

## Claims

1. A process for the preparation of a rubber-modified molding material (D), wherein
in a first stage, a first mixture (A) which contains at least one alkyl acrylate or methacrylate (a) of the formula (I) 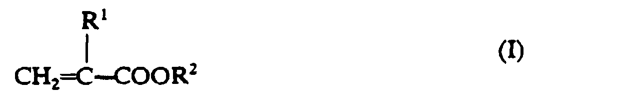 where R¹ is hydrogen or methyl and R² is alkyl of 1 to 32 carbon atoms, a first monomer (b) having two or more double bonds and, if required, a second or a plurality of monomers (C), in a proportion of up to 60%, is polymerized, preferably with free radicals, to give a rubber (B) having a content of acrylate monomer units of at least 30% by weight,
in a second stage, the resulting rubber (B) is dissolved, with or without the addition of a solvent, or swollen in a third monomer (d) or plurality thereof, to form a second mixture (C) and
in a third stage, the second mixture (C) formed after dissolution or swelling is polymerized at from 0 to 200°C, to give the rubber-modified molding material (D), the rubber-modified molding material (D) containing from 1 to 60% by weight of the rubber (B), and, in the molding material (D), the rubbers (B) in grafted form being present as particles having a diameter of from 0.1 to 20 µm in the polymer matrix.

2. A process as claimed in claim 1, wherein R² is alkyl of 1 to 18 carbon atoms.

3. A process as claimed in claim 1 or 2, wherein the mixture (A) has the following composition:
from 30 to 99.9% by weight of the alkyl acrylate or methacrylate (a),
from 0.1 to 10% by weight of the first monomer (b) and
from 0 to 60% by weight of the second monomer (c),
all data being in % by weight, based on the total amount of the mixture (A).

4. A process as claimed in any of claims 1 to 3, wherein a rubber-modified molding material (D) which contains from 5 to 40% by weight, based on the total amount of the rubber-modified molding material (D), of the rubber (B) is prepared.

5. A process as claimed in any of claims 1 to 4, wherein n-butyl acrylate or ethylhexyl acrylate is used as the alkyl acrylate or methacrylate (a).

6. A process as claimed in any of claims 1 to 5, wherein dihydrodicyclopentadienyl acrylate is used as first monomer (b).

7. A process as claimed in any of claims 1 to 6, wherein styrene and acrylonitrile are used as third monomer (d).

8. A process as claimed in any of claims 1 to 7, wherein the second monomer (c) contains groups which form free radicals on thermal decomposition.

9. A process as claimed in any of claims 1 to 8, wherein, in the third stage, the polymerization is continued as a suspension polymerization after a conversion of at least 15%.

10. A rubber molding material prepared according to any of the preceding process claims.

## Revendications

1. Procédé de fabrication de masses à mouler modifiées par du caoutchouc (D), caractérisé en ce que
au cours d'une première étape, on polymérise un premier mélange (A), qui contient au moins un acrylate ou un méthacrylate d'alkyle (a) de la formule générale (I) 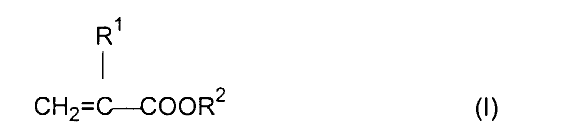 dans laquelle R¹ représente un atome d'hydrogène ou le radical méthyle et R² représente un radical alkyle qui comporte de 1 à 32 atomes de carbone, un premier monomère présentant deux ou plus de deux doubles liaisons (b) et, éventuellement, un second ou plus d'un second monomères (c), dans une proportion s'élevant jusqu'à 60%, de préférence, à radicaux libres, en un caoutchouc (B) d'une teneur en unités monomériques du type acrylate d'au moins 30% en poids,
au cours d'une seconde étape, en vue de la formation d'un second mélange (C), on gonfle ou on dissout, éventuellement, sous addition d'un solvant, le caoutchouc (B) ainsi formé dans un troisième monomère (d) ou plusieurs monomères et
au cours d'une troisième étape, on polymérise le second mélange (C) formé après la dissolution ou le gonflement en une masse à mouler modifiée par du caoutchouc (D), à une température de 0°C à 200°C,
où la masse à mouler modifiée par du caoutchouc (D) contient de 1 à 60% en poids du caoutchouc (B) et les caoutchoucs (B) se présentent en forme greffée dans la masse à mouler (D) sous forme de particules qui possèdent un diamètre compris entre 0,1 et 20 µm dans la matrice polymérique.

2. Procédé suivant la revendication 1, caractérisé en ce que R² représente un radical alkyle qui comporte de 1 à 18 atomes de carbone.

3. Procédé suivant la revendication 1 ou 2, caractérisé en ce que le mélange (A) présente la composition suivante :
30 à 99,9% en poids de l'acrylate ou du méthacrylate d'alkyle (a),
0,1 à 10% en poids du premier monomère (b) et
0 à 60% en poids du second monomère (c),
où toutes les indications en pourcentages pondéraux se rapportent à la quantité du mélange (A).

4. Procédé suivant l'une quelconque des revendications 1 à 3, caractérisé en ce que l'on fabrique des masses à mouler modifiées par du caoutchouc (D) qui contiennent de 5 à 40% en poids, par rapport à la quantité totale des masses à mouler modifiées par du caoutchouc (D), du caoutchouc (B).

5. Procédé suivant l'une quelconque des revendications 1 à 4, caractérisé en ce que l'on utilise de l'acrylate de n-butyle ou de l'acrylate d'éthylhexyle, à titre d'acrylate ou de méthacrylate d'alkyle.

6. Procédé suivant l'une quelconque des revendications 1 à 5, caractérisé en ce que l'on utilise l'acrylate de dihydrodicyclopentadiényle, à titre de premier monomère (b).

7. Procédé suivant l'une quelconque des revendications 1 à 6, caractérisé en ce que l'on utilise le styrène et l'acrylonitrile à titre de troisième monomère (d).

8. Procédé suivant l'une quelconque des revendications 1 à 7, caractérisé en ce que le second monomère (c) contient des groupes formant des radicaux par décomposition thermique.

9. Procédé suivant l'une quelconque des revendications 1 à 8, caractérisé en ce que, au cours de la troisième étape, on poursuit la polymérisation après une conversion d'au moins 15%, sous la forme de polymérisation en suspension..

10. Masse à mouler caoutchouteuse, fabriquée suivant l'une quelconque des revendications du procédé qui précédent.
